# EUROPÄISCHE PATENTSCHRIFT

(11) **EP 3 019 826 B1**
(45) Veröffentlichungstag und Bekanntmachung des Hinweises auf die Patenterteilung: **10.10.2018**
(21) Anmeldenummer: 14734006.1
(22) Anmeldetag: 30.06.2014
(51) Int. Cl.: G01C 19/72, G02B 6/42

(54) **INTEGRIERT-OPTISCHER KOPPLER UND FASEROPTISCHES SYSTEM MIT EINEM SOLCHEN INTEGRIERT-OPTISCHEN KOPPLER**
INTEGRATED OPTICAL COUPLER AND FIBRE-OPTICAL SYSTEM HAVING SUCH AN INTEGRATED OPTICAL COUPLER
COUPLEUR OPTIQUE INTÉGRÉ ET SYSTÈME FIBRE-OPTIQUE AYANT UN TEL COUPLEUR OPTIQUE INTÉGRÉ

(30) Priorität: 11.07.2013 DE 102013011641
(43) Veröffentlichungstag der Anmeldung: 18.05.2016
(73) Patentinhaber: Northrop Grumman LITEF GmbH, 79115 Freiburg (DE)
(72) Erfinder: VOIGT, Sven, 79111 Freiburg (DE); ZIMMERMANN, Steffen, 79331 Teningen (DE)
(74) Vertreter: Müller Hoffmann & Partner
(86) Internationale Anmeldenummer: PCT/EP2014/001788
(87) Internationale Veröffentlichungsnummer: WO 2015/003777

(56) Entgegenhaltungen:
- CN-Y- 201 318 948
- DE-A1-102011 104 512
- DE-T2- 3 786 622
- US-A- 5 377 283
- US-B1- 7 085 441

## Beschreibung

Die Erfindung betrifft einen integriert-optischen Koppler sowie ein faseroptisches System mit einem solchen integriert-optischen Koppler.
Sensoren für die Messung von Winkelgeschwindigkeiten, wie sie beispielsweise in Navigationssystemen oder Systemen zur Analyse oder Regelung von Bewegungen oder der Lage eines Objektes eingesetzt werden, können anstelle von mechanischen Gyroskopen auch interferometrische Faserkreisel (auch faseroptische Kreisel oder Faserkreisel genannt) enthalten. Diese analysieren die Interferenz zweier gegenläufig in einem aufgerollten Lichtwellenleiter umlaufender Lichtstrahlen, die sich durch eine Drehung des Lichtwellenleiters um eine Achse senkrecht zu der Ebene, in der er verlegt ist, durch die unterschiedliche Laufzeit der gegenläufigen Wellenzüge ergibt. Die Größe der Interferenz ist ein Maß für die Drehrate des Kreisels.
Ein solcher faseroptischer Kreisel umfasst prinzipiell eine Lichtquelle, die die umlaufenden Lichtstrahlen erzeugt und über einen Anschlusslichtwellenleiter bereitstellt, einen aufgerollten Lichtwellenleiter, eine optische Vorrichtung zum Einspeisen der gegenläufigen Lichtstrahlen in die beiden Enden des aufgerollten Lichtwellenleiters und zum Empfangen der den aufgerollten Lichtwellenleiter passierten gegenläufigen Lichtstrahlen sowie einen Detektor, der die Interferenz der gegenläufigen Wellenzüge bestimmt. Sind die Lichtquelle und der Detektor in getrennten Geräten realisiert, so wird darüber hinaus ein optischer Koppler verwendet, der die Lichtstrahlen entweder von der Lichtquelle zur optischen Vorrichtung (zum aufgerollten Lichtwellenleiter) oder von der optischen Vorrichtung (vom aufgerollten Lichtwellenleiter) zum Detektor leitet. Der optische Koppler kann als integriert-optischer Koppler, bei dem die Lichtstrahlen über planare Wellenleiter geleitet und verzweigt werden, ausgeführt sein. Darüber hinaus können in Abhängigkeit von der Art der verwendeten Lichtquelle und der für die Anschlussleiter und den Lichtwellenleiter verwendeten Fasern weitere Komponenten wie Spleiße oder Depolarisatoren notwendig sein.

Die DE 10 2011 104 512 A1 offenbart einen integriert-optischen Koppler mit Wellenleitern mit einer isotropen Brechzahl sowie daran angekoppelten polarisationserhaltenden Monomodefasern.

Aufgabe der vorliegenden Erfindung ist es, einen integriert-optischen Koppler bereitzustellen, der sowohl geeignet ist, die Anzahl der im faseroptischen Kreisel notwendigen Komponenten zu verringern, als auch kostengünstig hergestellt werden kann. Darüber hinaus ist es Aufgabe der Erfindung, ein faseroptisches System mit einem solchen integriert-optischen Koppler bereitzustellen.

Diese Aufgabe wird gelöst durch die Gegenstände der unabhängigen Ansprüche. Bevorzugte Ausführungsformen finden sich in den Unteransprüchen.
Ein integriert-optischer Koppler gemäß der vorliegenden Erfindung umfasst ein Substrat, mindestens zwei auf oder in dem Substrat angeordnete planare Wellenleiter aus einem Material mit einer nahezu isotropen Brechzahl und mindestens drei an die planaren Wellenleiter angekoppelte Monomodefasern. Die planaren Wellenleiter sowie die Monomodefasern sind geeignet, Lichtstrahlen bzw. Lichtwellen zu übertragen. Dabei ist eine der angekoppelten Monomodefasern eine polarisationserhaltende Faser, während die anderen Monomodefasern nichtpolarisationserhaltende Fasern sind.
In vorteilhafter Weise ist keine Ausrichtung der polarisationserhaltenden Faser vorgesehen, wodurch der Herstellungsprozess vereinfacht werden kann.
Das Material der planaren Wellenleiter des integriert-optischen Kopplers weist eine fast vollständige Isotropie der Brechzahl bezüglich ihrer Abhängigkeit von der Ausbreitungsrichtung und Polarisation des geleiteten Lichtes auf. Der Begriff "nahezu isotrope Brechzahl" bedeutet, dass die Anisotropie der Brechzahl (Δn) kleiner als 10⁻⁶ ist. Gemäß einer Ausführungsform ist das Material Glas. Dieses weist neben einer sehr kleinen Doppelbrechung eine sehr geringe Wellenleiterdämpfung auf. Beispielsweise können die planaren Wellenleiter isotrope Wellenleiter sein und als dotierte Bereiche in einem amorphen Glassubstrat ausgeführt sein, wobei der Wellenleiter ein kreisrundes oder nahezu kreisrundes Profil aufweisen kann. Solch ein vergrabener Wellenleiter kann beispielsweise durch Diffusion von Dotierstoffen und deren Einbau in das Substratmaterial mittels feldgestütztem Ionenaustausch erzeugt werden.
Der integriert-optische Koppler kann zwei Eingänge und einen Ausgang (2x1 Koppler) oder zwei Eingänge und zwei Ausgänge (2x2 Koppler) aufweisen.
Gemäß einer Ausführungsform kann mindestens eine der angeschlossenen Monomodefasern des integriert-optischen Kopplers an dem dem planaren Wellenleiter entgegensetzten Ende der Faser einen Stecker (Pigtail) aufweisen, der beispielsweise eine Kopplung an andere faseroptische Vorrichtungen ermöglicht.

Ein faseroptisches System gemäß der vorliegenden Erfindung umfasst einen erfindungsgemäßen integriert-optischen Koppler, eine Lichtquelle, die geeignet ist, Lichtstrahlen zu erzeugen, und eine erste Anschlussfaser, die an ihrem einen Ende mit der Lichtquelle und an ihrem anderen Ende mit der polarisationserhaltenden ersten Monomodefaser des integriert-optischen Kopplers verbunden ist.

Auch die erste Anschlussfaser kann eine polarisationserhaltende Faser sein.

Sind sowohl die erste Monomodefaser des integriert-optischen Kopplers als auch die erste Anschlussfaser polarisationserhaltende Fasern, so kann die erste Anschlussfaser so an die erste Monomodefaser des integriert-optischen Kopplers angekoppelt sein, dass die ausgezeichneten Richtungen bzw. Spannungsrichtungen der ersten Monomodefaser und der ersten Anschlussfaser einen Winkel von 45° zueinander aufweisen. Dies kann beispielsweise durch einen 45°-Spleiss umgesetzt werden.
Darüber hinaus können die erste Anschlussfaser und die erste Monomodefaser des integriert-optischen Kopplers ein Verhältnis der Verzögerungslängen von 1:2 zueinander aufweisen. In diesem Fall bilden die erste Anschlussfaser und die erste Monomodefaser einen Lyot-Depolarisator, wodurch ein separat ausgeführter Lyot-Depolarisator eingespart werden kann.
Das erfindungsgemäße System kann weiterhin einen aufgerollten Lichtwellenleiter, der um eine Achse senkrecht zu der Ebene, in der er verlegt ist, gedreht werden kann, eine optische Vorrichtung zum Einspeisen von gegenläufigen, von der Lichtquelle erzeugten Lichtstrahlen in die beiden Enden des aufgerollten Lichtwellenleiters und zum Empfangen der gegenläufigen Lichtstrahlen, nachdem sie den aufgerollten Lichtwellenleiter passiert haben, wobei die optische Vorrichtung mit einer zweiten Monomodefaser des integriert-optischen Kopplers verbunden ist, einen Detektor, der geeignet ist, die Interferenz der Wellenzüge der von der optischen Vorrichtung empfangenen Lichtstrahlen zu bestimmen, und eine zweite Anschlussfaser, deren eines Ende mit dem Detektor und deren anderes Ende mit einer dritten Monomodefaser des integriert-optischen Kopplers verbunden ist und die geeignet ist, die von der optischen Vorrichtung empfangenen Lichtstrahlen vom integriert-optischen Koppler zum Detektor zu leiten, umfassen. In diesem Fall stellt das System einen einachsigen faseroptischen Kreisel dar. Bei Anordnung von entsprechenden weiteren Komponenten können auch mehrachsige faseroptische Kreisel realisiert werden. Wenn die zweite Monomodefaser einen Stecker (Pigtail) aufweist, mit dem die zweite Monomodefaser mit der optischen Vorrichtung, die beispielsweise ein multifunktionaler integriert-optischer Chip (MIOC) sein kann, verbunden werden kann, kann ein solcher faseroptischer Kreisel mit nur zwei Spleißen, nämlich zur Verbindung der ersten Anschlussfaser von der Lichtquelle mit der ersten Monomodefaser des integriert-optischen Kopplers und zur Verbindung der zweiten Anschlussfaser vom Detektor mit der dritten Monomodefaser des integriert-optischen Kopplers, hergestellt werden. Durch die Vereinfachung des Fertigungsprozesses, die Einsparung von zusätzlichen Komponenten sowie die Nutzung von kostengünstigen Ausführungsformen der Komponenten (beispielsweise nichtpolarisationserhaltende Fasern) kann ein faseroptischer Kreisel mit einem mittleren Genauigkeitsbereich (etwa 1°/h Bias Restfehler) kostengünstig erzeugt werden.

Ausführungsformen der vorliegenden Erfindung werden im Folgenden an Hand der Figuren näher erläutert, wobei gleichartige Elemente mit gleichen Bezugszeichen gekennzeichnet sind.
Die Figur 1 zeigt eine schematische Darstellung eines integriert-optischen Kopplers gemäß einer Ausführungsform der Erfindung.
Die Figur 2 zeigt eine schematische Darstellung eines faseroptischen Systems gemäß einer Ausführungsform der Erfindung.
Die Figur 3 zeigt eine schematische Darstellung eines faseroptischen Systems gemäß einer anderen Ausführungsform der Erfindung.

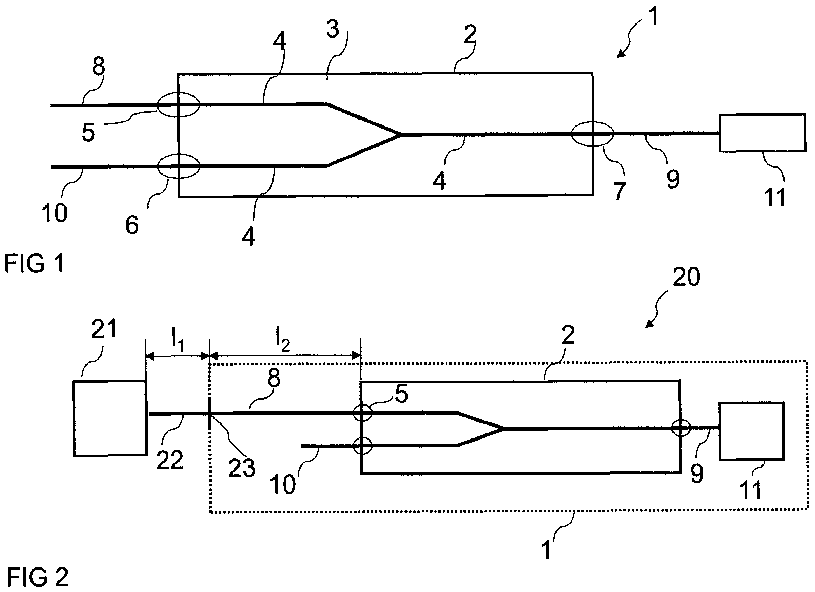

Der in Figur 1 dargestellte integriert-optische Koppler 1 umfasst einen Wellenleiterchip 2, der ein Substrat 3, mindestens zwei planare Wellenleiter 4, die auf oder in dem Substrat 3 angeordnet sind, sowie einen ersten und einen zweiten Eingang 5 und 6 und mindestens einen Ausgang 7 aufweist. Die in Figur 1 dargestellte Ausführungsform des Wellenleiterchips entspricht einem 2x1 Koppler. Der Wellenleiterchip 2 kann auch weitere Ein- oder Ausgänge aufweisen, so dass auch andere Koppler, beispielsweise ein 2x2 Koppler mit zwei Eingängen und zwei Ausgängen, realisiert werden können. Dabei legen die Begriffe "Eingang" und "Ausgang" nicht die Ausbreitungsrichtung von Lichtstrahlen, die in den planaren Wellenleitern übertragen werden, fest. Vielmehr können Lichtstrahlen sowohl von einem Eingang zu einem Ausgang oder umgekehrt, das heißt von einem Ausgang zu einem Eingang, übertragen werden. Die planaren Wellenleiter 4 bestehen aus einem Material mit einer nahezu isotropen Brechzahl, das heißt, mit einer Anisotropie der Brechzahl von kleiner als 10⁻⁶ (Δn < 10⁻⁶). Beispielsweise können die planaren Wellenleiter 4 in Glas ausgeführt sein.
Der integriert-optische Koppler 1 umfasst weiterhin mindestens drei an die planaren Wellenleiter 4 an den Eingängen 5 und 6 bzw. dem Ausgang 7 des Wellenleiterchips 2 angekoppelte Monomodefasern 8, 9 und 10. Eine erste Monomodefaser 8 ist beispielsweise am ersten Eingang 5 an einen der planaren Wellenleiter 4 angekoppelt, während eine zweite Monomodefaser 9 am Ausgang 7 mit einem der planaren Wellenleiter 4 verbunden ist und eine dritte Monomodefaser 10 am zweiten Eingang 6 mit einem der planaren Wellenleiter 4 verbunden ist.
Die planaren Wellenleiter 4 sowie die erste, zweite und dritte Monomodefaser 8, 9 und 10 sind geeignet, Lichtstrahlen bzw. Lichtwellen zu übertragen.
Die erste Monomodefaser 8 ist eine polarisationserhaltende Faser, während die zweite und die dritte Monomodefaser 9 und 10 nichtpolarisationserhaltende Fasern sein können.
Eine polarisationserhaltende Faser (Polarization-maintaining optical fiber (PMF or PM fiber)) ist eine optische Faser, in der die Polarisation einer eingespeisten linear polarisierten Lichtwelle während der Fortpflanzung in der Faser nicht verändert wird, oder anders ausgedrückt, dass nur eine ganz geringe (vorzugsweise keine) Kreuzkopplung zwischen den Polarisationsmoden der Faser auftritt.

Zur Erzeugung von polarisationserhaltenden Fasern werden unterschiedliche Verfahren eingesetzt. Häufig wirkt eine Spannung auf den Faserkern ein, indem ein nichtzirkularer Mantelquerschnitt benutzt wird, bzw. in den Mantel Stäbe aus anderen Materialien eingebettet sind.
Polarisationserhaltende Fasern behalten die existierende Polarisation von linear polarisiertem Licht bei, welches mit einer korrekten Orientierung in die Faser eingespeist wird ("ausgerichtete Faser"). Falls die Polarisation des eingespeisten Lichts nicht mit der Spannungsrichtung der Faser ausgerichtet ist, entsteht am Ausgang der Faser eine Mischung aus linear und zirkular polarisiertem Licht (generell wird es elliptisch polarisiert sein).

Im vorliegenden Ausführungsbeispiel ist eine Ausrichtung der polarisationserhaltenden Faser 8 nicht notwendig für die Funktion des integriert-optischen Kopplers 1. Daher kann der integriert-optische Koppler 1 genauso kostengünstig wie ein integriert-optischer Koppler mit drei nichtpolarisationserhaltenden Monomodefasern hergestellt werden.
Die zweite Monomodefaser 9 weist in der dargestellten Ausführungsform des integriert-optischen Kopplers 1 an dem Ende, das nicht am Ausgang 7 des Wellenleiterchips 2 mit einem planaren Wellenleiter 4 verbunden ist, einen Stecker (Pigtail) 11 auf, mit dem es mit weiteren optischen Komponenten verbunden werden kann.
In Figur 2 ist eine erste Ausführungsform eines faseroptischen Systems gemäß der vorliegenden Erfindung dargestellt. Das faseroptische System 20 der ersten Ausführungsform umfaßt einen integriert-optischen Koppler 1, wie er beispielsweise in der Figur 1 dargestellt ist, sowie eine Lichtquelle 21 und eine erste Anschlußfaser 22. Die Lichtquelle 21 ist geeignet, übertragbare Lichtstrahlen zu erzeugen. Eine solche Lichtquelle kann beispielsweise eine SLD-Lichtquelle (Super-lumineszenz Diode) oder eine Superfluoreszenz-Lichtquelle (ASE-Lichtquelle (Amplified Spontaneous Emission-Lichtquelle)) oder eine andere Breitbandlichtquelle sein. Die erste Anschlußfaser 22 dient der Übertragung des von der Lichtquelle 21 erzeugten Lichts zum integriert-optischen Koppler 1. Die erste Anschlußfaser 22 ist an ihrem einen Ende mit der Lichtquelle 21 und mit ihrem anderen Ende mit der ersten Monomodefaser 8 des integriert-optischen Kopplers 1 verbunden. Die Verbindung zur ersten Monomodefaser 8 kann beispielsweise durch einen ersten Spleiß 23 realisiert werden. Jedoch sind auch andere Möglichkeiten der Verbindung der beiden Fasern möglich, beispielsweise eine Fasersteckerung. Die erste Anschlußfaser 22 ist eine polarisationserhaltende Faser, die sowohl ausgerichtet oder nichtausgerichtet sein kann. Auch hier ermöglicht die Verwendung einer nichtausgerichteten Faser für die erste Anschlußfaser 22 die Einsparung von Kosten.
Die erste Anschlußfaser 22 und die erste Monomodefaser 8 können in einer Ausführungsform so miteinander verbunden sein, dass die ausgezeichnete Richtung bzw. die Spannungsrichtung der ersten Anschlußfaser 22 und die ausgezeichnete Richtung bzw. Spannungsrichtung der ersten Monomodefaser 8 einen Winkel von 45° zueinander aufweisen. Beispielsweise kann dies durch einen 45°-Spleiß realisiert werden.

Dann wirken die erste Anschlußfaser 22 und die erste Monomodefaser 8 als Lyot-Depolarisator, wenn ihre Spannungsrichtungen wie vorstehend beschrieben einen Versatz von 45° zueinander und die Fasern ein Verhältnis der Verzögerungslängen von 1:2 aufweisen. Die Verzögerungslänge ergibt sich dabei aus dem Produkt der geometrischen Länge und der Differenz der Brechungsindizes (Δn) der jeweiligen Faser. Weisen die erste Anschlußfaser 22 und die erste Monomodefaser 8 die selbe Doppelbrechung, das heißt die selbe Differenz der Brechungsindizes für den ordentlichen und den außerordentlichen Lichtstrahl, auf, dann enspricht das Verhältnis der Verzögerungslängen der Fasern dem Verhältnis der geometrischen Länge l₁ der ersten Anschlußfaser 22 zur geometrischen Länge l₂ der ersten Monomodefaser 8. Die Länge l₁ entspricht dabei der Länge der ersten Anschlußfaser 22 gemessen von der Lichtquelle 21 bis zum Koppelpunkt mit der ersten Monomodefaser 8, beispielsweise bis zum ersten Spleiß 23, während die Länge l₂ der Länge der ersten Monomodefaser 8 gemessen vom Koppelpunkt mit der ersten Anschlußfaser 22 bis zum Eingang 5 des Wellenleiterchips 2 entspricht. Jedoch können die erste Anschlußfaser 22 und die erste Monomodefaser 8 auch unterschiedliche Doppelbrechungen aufweisen, beispielsweise können die Fasern aus unterschiedlichen Fasertypen oder aus unterschiedlichen Chargen des selben Fasertyps bestehen.

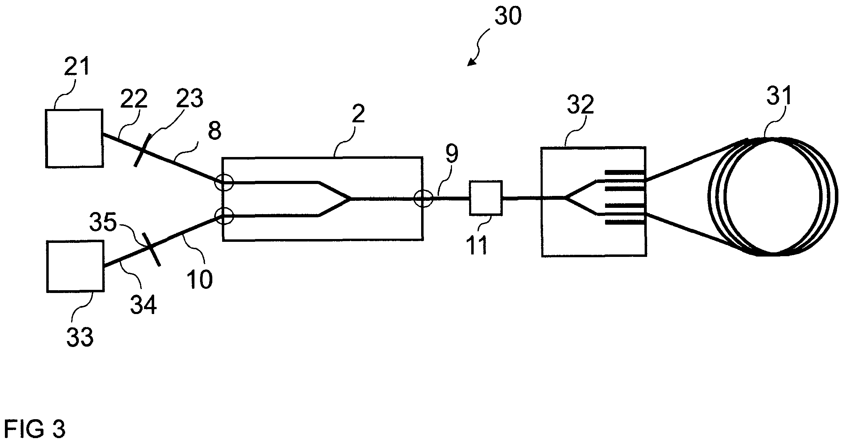

In Figur 3 ist eine zweite Ausführungsform eines faseroptischen Systems gemäß der vorliegenden Erfindung dargestellt, die einem Faserkreisel entspricht. Das faseroptische System 30 der zweiten Ausführungsform umfaßt einen integriert-optischen Koppler gemäß der vorliegenden Erfindung, wie er beispielsweise in Fig. 1 dargestellt ist, eine Lichtquelle 21 sowie eine erste Anschlußfaser 22, die mit einer ersten Monomodefaser 8 des integriert-optischen Kopplers durch einen ersten Spleiß 23 verbunden ist, einen aufgerollten Lichtwellenleiter 31, der um eine Achse senkrecht zu der Ebene, in der er verlegt ist, gedreht werden kann, eine optische Vorrichtung 32 sowie einen Detektor 33 und eine zweite Anschlußfaser 34. Für den integriert-optischen Koppler sowie die Lichtquelle 21, die erste Anschlußfaser 22 und den ersten Spleiß 23 gelten die bezüglich der Figuren 1 und 2 gemachten Ausführungen.

Die beiden Enden des aufgerollten Lichtwellenleiters 31 sind mit zwei Ausgängen der optischen Vorrichtung 32 verbunden. Die optische Vorrichtung 32 kann beispielsweise ein multifunktionaler integriert-optischer Chip (MIOC) sein und ist geeignet, die von der Lichtquelle 21 erzeugten Lichtstrahlen in gegenläufiger Richtung in die beiden Enden des aufgerollten Lichtwellenleiters 31 einzuspeisen sowie die gegenläufigen Lichtstrahlen nach Passieren des aufgerollten Lichtwellenleiters 31, im folgenden rückläufige Lichtstrahlen genannt, wieder zu empfangen und an andere Komponenten des faseroptischen Systems weiterzuleiten. In der in Figur 3 dargestellten Ausführungsform werden die rückläufigen Lichtstrahlen an den integriert-optischen Koppler weitergeleitet. Dazu ist der Eingang der optischen Vorrichtung 32 mit einer zweiten Monomodefaser 9 des integriert-optischen Kopplers verbunden. Ist die zweite Monomodefaser 9 mit einem Stecker 11, wie in Fig. 1 dargestellt, versehen, kann die Verbindung über den Stecker 11 realisiert werden. Auch mit Bezug auf den Eingang und die Ausgänge der optischen Vorrichtung 32 gilt, dass die Begriffe "Eingang" und "Ausgang" keine Aussage über die Ausbreitungsrichtung von Lichtstrahlen, die durch die optische Vorrichtung 32 übertragen werden, machen.

Die zweite Anschlußfaser 34 ist an einem Ende mit einer dritten Monomodefaser 10 des integriert-optischen Kopplers verbunden, beispielsweise mittels eines zweiten Spleißes 35. Das andere Ende der zweiten Anschlußfaser 34 ist mit dem Detektor 33 verbunden. Dieser ist geeignet, die Interferenz der Wellenzüge der rückläufigen Lichtstrahlen, die von der optischen Vorrichtung 32 über die dritte Monomodefaser 10, den integriert-optischen Koppler und die zweite Anschlußfaser 34 übertragen werden, zu bestimmen.

Die in Figur 3 dargestellte Ausführungsform des faseroptischen Systems ermöglicht die Realisierung eines einachsigen Faserkreisels mit nur zwei Spleißen, wodurch der Fertigungsprozess vereinfacht und verbilligt werden kann.

## Patentansprüche

1. Integriert-optischer Koppler (1) umfassend:
ein Substrat (3);
mindestens zwei auf oder in dem Substrat (3) angeordnete planare Wellenleiter (4) aus einem Material mit einer nahezu isotropen Brechzahl; und
mindestens drei an die planaren Wellenleiter (4) angekoppelte Monomodefasern (8, 9, 10),
**dadurch gekennzeichnet, dass**
eine erste der angekoppelten Monomodefasern (8) eine polarisationserhaltende Faser ist, und
die anderen Monomodefasern (9, 10) nichtpolarisationserhaltende Fasern sind.

2. Integriert-optischer Koppler nach Anspruch 1,
**dadurch gekennzeichnet, dass**
das Material der planaren Wellenleiter (4) eine Anisotropie der Brechzahl von kleiner als 10⁻⁶ aufweist.

3. Integriert-optischer Koppler nach Anspruch 1 oder 2,
**dadurch gekennzeichnet, dass**
das Material der planaren Wellenleiter (4) Glas ist.

4. Faseroptisches System umfassend:
einen integriert-optischen Koppler (1) entsprechend einem der Ansprüche 1 bis 3,
eine Lichtquelle (21), die geeignet ist, Lichtstrahlen zu erzeugen, und
eine erste Anschlussfaser (22), die an ihrem einen Ende mit der Lichtquelle (21) und an ihrem anderen Ende mit der polarisationserhaltenden Monomodefaser (8) des integriert-optischen Kopplers (1) verbunden ist.

5. Faseroptisches System nach Anspruch 4,
**dadurch gekennzeichnet, dass**
die erste Anschlussfaser (22) eine polarisationserhaltende Faser ist.

6. Faseroptisches System nach Anspruch 5,
**dadurch gekennzeichnet, dass**
die erste Anschlussfaser (22) so an die erste Monomodefaser (8) des integriert-optischen Kopplers (1) angekoppelt ist, dass die Spannungsrichtungen der ersten Monomodefaser (8) und der ersten Anschlussfaser (22) einen Winkel von 45° zueinander aufweisen.

7. Faseroptisches System nach Anspruch 6,
**dadurch gekennzeichnet, dass**
die erste Anschlussfaser (22) und die erste Monomodefaser (8) des integriert-optischen Kopplers (1) ein Verhältnis der Verzögerungslängen von 1:2 zueinander aufweisen.

8. Faseroptisches System nach einem der Ansprüche 4 bis 7, weiterhin umfassend:
einen aufgerollten Lichtwellenleiter (31), der um eine Achse senkrecht zu der Ebene, in der er verlegt ist, gedreht werden kann,
eine optische Vorrichtung (32) zum Einspeisen von gegenläufigen, von der Lichtquelle (21) erzeugten Lichtstrahlen in die beiden Enden des aufgerollten Lichtwellenleiters (31) und zum Empfangen der gegenläufigen Lichtstrahlen, nachdem sie den aufgerollten Lichtwellenleiter (31) passiert haben, wobei die optische Vorrichtung (32) mit einer zweiten Monomodefaser (9) des integriert-optischen Kopplers (1) verbunden ist,
einen Detektor (33), der geeignet ist, die Interferenz der Wellenzüge der von der optischen Vorrichtung (32) empfangenen Lichtstrahlen zu bestimmen, und
eine zweite Anschlussfaser (34), deren eines Ende mit dem Detektor (33) und deren anderes Ende mit einer dritten Monomodefaser (10) des integriert-optischen Kopplers (1) verbunden ist und die geeignet ist, die von der optischen Vorrichtung (32) empfangenen Lichtstrahlen vom integriert-optischen Koppler (1) zum Detektor (33) zu leiten.

## Claims

1. An integrated optical coupler (1) comprising:
a substrate (3);
at least two planar wave guides (4) arranged on or in the substrate (3) and made of a material having a virtually isotropic refractive index; and
at least three mono-mode fibers (8, 9, 10) coupled to the planar wave guides (4),
**characterized in that**
a first one of the coupled mono-mode fibers (8) is a polarization-maintaining fiber, and
the other mono-mode fibers (9, 10) are polarization-non-maintaining fibers.

2. The integrated optical coupler according to claim 1,
**characterized in that**
the material of the planar wave guides (4) has an anisotropy of refractive index of less than 10⁻⁶.

3. The integrated optical coupler according to claims 1 or 2,
**characterized in that**
the material of the planar wave guides (4) is glass.

4. A fiberoptic system comprising:
an integrated optical coupler (1) according to anyone of claims 1 to 3,
a light source (21) configured to generate light beams, and
a first pigtail fiber (22) that is connected with one of its ends to the light source (21) and with the other of its ends to the polarization-maintaining mono-mode fiber (8) of the integrated optical coupler (1).

5. The fiberoptic system according to claim 4,
**characterized in that**
the first pigtail fiber (22) is a polarization-maintaining fiber.

6. The fiberoptic system according to claim 5,
**characterized in that**
the first pigtail fiber (22) is coupled such to the first mono-mode fiber (8) of the integrated optical coupler (1) that the directions of tension of the first mono-mode fiber (8) and the first pigtail fiber (22) include an angle of 45° with respect to each other.

7. The fiberoptic system according to claim 6,
**characterized in that**
the first pigtail fiber (22) and the first mono-mode fiber (8) of the integrated optical coupler (1) have a ratio of retardation lengths of 1:2 with respect to each other.

8. The fiberoptic system according to anyone of claims 4 to 7, further comprising:
a coiled optical wave guide (31) that can be rotated around an axis perpendicular to the plane in which it is placed,
an optical device (32) for injecting light beams generated by the light source (21) in opposite directions into the both ends of the coiled optical wave guide (31) and for receiving light beams after they have passed through the coiled optical wave guide (31) from opposite directions, wherein the optical device (32) is connected to a second mono-mode fiber (9) of the integrated optical coupler (1),
a detector (33) configured to determine interference of wave trains of light beams received by the optical device (32), and
a second pigtail fiber (34) that has one of its ends connected to the detector (33) and has the other of its ends connected to a third mono-mode fiber (10) of the integrated optical coupler (1), and which is configured to guide the light beams received from the optical device (32) from the integrated optical coupler (1) to the detector (33).

## Revendications

1. Coupleur optique intégré (1) comprenant :
un substrat (3) ;
au moins deux guides d'ondes planaires (4) disposés sur ou dans le substrat (3) et composés d'un matériau qui présente un indice de réfraction quasiment isotrope ; et
au moins trois fibres monomode (8, 9, 10) couplées aux guides d'ondes planaires (4),
**caractérisé en ce qu'**une première fibre monomode (8) couplée est une fibre à maintien de polarisation, et
les autres fibres monomode (9, 10) sont des fibres sans maintien de polarisation.

2. Coupleur optique intégré selon la revendication 1, **caractérisé en ce que** le matériau des guides d'ondes planaires (4) présente une anisotropie de l'indice de réfraction inférieure à 10⁻⁶.

3. Coupleur optique intégré selon la revendication 1 ou 2, **caractérisé en ce que** le matériau des guides d'ondes planaires (4) est du verre.

4. Système à fibres optiques comprenant :
un coupleur optique intégré (1) selon l'une des revendications 1 à 3,
une source lumineuse (21) qui est apte à produire des rayons lumineux, et
une première fibre amorce (22) qui est reliée, à une extrémité, à la source lumineuse (21) et, à son autre extrémité, à la fibre monomode à maintien de polarisation (8) du coupleur optique intégré (1).

5. Système à fibres optiques selon la revendication 4, **caractérisé en ce que** la première fibre amorce (22) est une fibre à maintien de polarisation.

6. Système à fibres optiques selon la revendication 5, **caractérisé en ce que** la première fibre amorce (22) est couplée à la première fibre monomode (8) du coupleur optique intégré (1) de telle sorte que les sens de tension de la première fibre monomode (8) et de la première fibre amorce (22) définissent entre eux un angle de 45°.

7. Système à fibres optiques selon la revendication 6, **caractérisé en ce que** la première fibre amorce (22) et la première fibre monomode (8) du coupleur optique intégré (1) présentent entre eux un rapport des longueurs de retard de 1:2.

8. Système à fibres optiques selon l'une des revendications 4 à 7, comprenant également :
un guide d'ondes lumineuses enroulé (31) qui peut être tourné sur un axe perpendiculaire au plan dans lequel il est posé,
un dispositif optique (32) pour injecter des rayons lumineux opposés, produits par la source lumineuse (21), dans les deux extrémités du guide d'ondes lumineuses enroulé (31), et pour recevoir les rayons lumineux opposés après qu'ils ont franchi le guide d'ondes lumineuses enroulé (31), le dispositif optique (32) étant relié à une deuxième fibre monomode (9) du coupleur optique intégré (1),
un détecteur (33) qui est apte à définir l'interférence des trains d'ondes des rayons lumineux reçus par le dispositif optique (32), et
une deuxième fibre amorce (34) dont une extrémité est reliée au détecteur (33) et dont l'autre extrémité est reliée à une troisième fibre monomode (10) du coupleur optique intégré (1), et qui est apte à guider les rayons lumineux reçus par le dispositif optique (32), du coupleur optique intégré (1) jusqu'au détecteur (33).
